## Europäisches Patentamt
## European Patent Office
## Office européen des brevets

(11) Numéro de publication : **0 033 047**
**B1**

(12) **FASCICULE DE BREVET EUROPÉEN**

(45) Date de publication du fascicule du brevet :
02.05.84

(21) Numéro de dépôt : **80401863.8**

(22) Date de dépôt : **24.12.80**

(51) Int. Cl.³ : **G 11 B 7/08, G 11 B 7/12**

(54) Equipage mobile d'un lecteur enregistreur de vidéodisque, et lecteur enregistreur de vidéodisque comprenant un tel équipage.

(30) Priorité : 24.01.80 FR 8001525

(43) Date de publication de la demande :
05.08.81 Bulletin 81/31

(45) Mention de la délivrance du brevet :
02.05.84 Bulletin 84/18

(84) Etats contractants désignés :
DE GB NL

(56) Documents cités :
DE-A- 2 645 326
FR-A- 2 294 605
FR-A- 2 351 468
FR-A- 2 360 957
FR-A- 2 425 782
FR-A- 2 437 042
FR-A- 2 443 734
PATENTS ABSTRACTS OF JAPAN, vol. 2, no. 2, 13 janvier 1979, page 62E83
PATENTS ABSTRACTS OF JAPAN, vol. 3, no. 47, 20 avril 1979, page 45E105

(73) Titulaire : THOMSON-CSF
173, Boulevard Haussmann
F-75379 Paris Cedex 08 (FR)

(72) Inventeur : Arquie, Louis
"THOMSON-CSF" SCPI 173, bld Haussmann
F-75360 Paris Cedex 08 (FR)
Inventeur : Thirouard, Michel
"THOMSON-CSF" SCPI 173, bld Haussmann
F-75360 Paris Cedex 08 (FR)

(74) Mandataire : Wang, Pierre et al
THOMSON-CSF SCPI 173, Bld Haussmann
F-75379 Paris Cedex 08 (FR)

Jouve, 18, rue St-Denis, 75001 Paris, France

## Equipage mobile d'un lecteur enregistreur de vidéodisque, et lecteur enregistreur de vidéodisque comprenant un tel équipage

La présente invention se rapporte aux équipages mobiles de lecteur enregistreur de vidéodisque qui permettent de déplacer la tête optique d'un tel lecteur enregistreur radialement le long du disque pour suivre la piste supportant les informations. Ces équipages mobiles permettent également de maintenir la focalisation de l'objectif dont est muni cette tête ainsi que la poursuite fine de la piste. L'invention concerne également les lecteurs enregistreurs de vidéodisque comprenant un tel équipage mobile, ainsi que les lecteurs et les enregistreurs simples.

On sait réaliser un tel équipage mobile en déplaçant un chariot à l'aide d'une vis mère. La tête de lecture placée sur ce chariot comprend alors un objectif placé dans un pot magnétique semblable au moteur d'un haut-parleur et qui permet de maintenir la focalisation de cet objectif sur le disque. La poursuite fine de la piste se fait à l'aide d'un miroir de renvoi monté sur le cadre d'un galvanomètre.

Il est par ailleurs connu, de par la demande de brevet FR-A-2 351 468, un dispositif du type comprenant une tête solidaire d'un équipage mobile déplaçant la tête radialement par rapport à un disque optique et comprenant un objectif lié à un support ; la tête comportant une paire de bobines autorisant, lorsqu'elles sont parcourues par des courants électriques et plongées dans des champs magnétiques convenables, de développer des forces provenant provoquant un double mouvement : un mouvement parallèle à l'axe optique de l'objectif permettant une focalisation correcte d'un faisceau de rayons sur une piste du disque optique et un mouvement de rotation autour d'un axe perpendiculaire à l'axe optique de manière à permettre un suivi de piste par ledit faisceau.

Cependant, la structure enseignée reste substantiellement celle, classique, dite structure en « pot » et nécessite notamment, lorsque l'on désire accéder à une piste, le déplacement d'un aimant permanent et de culasses métalliques en même temps que l'équipage mobile, ce qui augmente notablement l'inertie de l'ensemble.

Aussi, dans la demande de brevet européen EP-A-0 012 650 déposée par la demanderesse on a décrit un équipage mobile formé essentiellement d'une bobine plate très mince et très légère enserrée entre deux plaques de verre et pouvant se déplacer verticalement et longitudinalement dans l'entrefer d'un circuit magnétique. Deux fils verticaux permettent le suivi de piste, et les organes de lecture sont formés d'un laser à semiconducteur et d'une diode détectrice directement fixés sur cet équipage mobile.

Si la masse de ce dernier dispositif est très faible et amène donc à des forces d'inertie très faibles, le guidage mécanique est difficile à réaliser et provoque des couplages entre les fonctions de suivi de piste et de focalisation. Par ailleurs, l'utilisation de fils électriques verticaux simples pour le suivi de piste ne permet d'obtenir qu'une force faible pour l'asservissement radial nécessaire à ce suivi malgré la nécessité d'utiliser des courants électriques importants et donc difficiles à mettre en œuvre.

Pour pallier ces inconvénients, l'invention a donc pour objet un équipage mobile d'un lecteur enregistreur de vidéodisque, du type comprenant un objectif permettant de focaliser un faisceau lumineux sur une piste portée par un vidéodisque le long d'un premier axe sensiblement perpendiculaire au disque, un bâti supportant l'objectif un chariot supportant ce bâti et des moyens permettant de déplacer ce chariot radialement par rapport au disque selon un deuxième axe pour suivre la piste, des moyens permettant de réunir ce bâti au chariot en permettant un premier mouvement longitudinal du bâti par rapport au chariot le long du premier axe pour maintenir la focalisation du faisceau lumineux sur le disque et un deuxième mouvement de rotation du bâti par rapport au chariot autour d'un troisième axe perpendiculaire aux deux premiers axes pour maintenir le point de focalisation du faisceau lumineux sur la piste du disque, et une première paire de bobines fixées au bâti symétriquement par rapport au premier axe et permettant, lorsqu'elles sont parcourues par des courants électriques et plongées dans des champs magnétiques, de développer des forces provoquant les premier et deuxième mouvements, caractérisé en ce que les bobines de ladite première paire sont plates et fixées au bâti dans un plan perpendiculaire au troisième axe et en ce qu'il comprend pour générer lesdits champs magnétiques au moins un aimant muni de deux pièces polaires et d'une armature définissant entre elle-même et les pièces polaires deux entrefers plans s'étendant dans la direction du deuxième axe, situés l'un au-dessus de l'autre par rapport au premier axe et parcourus par des champs magnétiques parallèles au troisième axe et de sens opposés, ladite première paire de bobines coulissant dans ces entrefers pour que le courant électrique qui y circule ait dans les portions des bobines situées dans ces entrefers la direction du deuxième axe et des sens opposés pour une même bobine.

D'autres particularités et avantages de l'invention apparaîtront clairement dans la description suivante présentée à titre d'exemple non limitatif — en particulier quant aux valeurs numériques citées — d'un appareil nommé lecteur, mais qui peut aussi bien être un enregistreur qu'un lecteur-enregistreur, et faite en regard des figures suivantes :

la figure 1, qui représente les pièces magnétiques et les bobinages utilisés pour maintenir la focalisation et le suivi de piste d'un équipage mobile de lecteur-enregistreur ;

la figure 2, qui représente une vue en coupe d'un équipage mobile de lecteur-enregistreur ;

la figure 3, qui représente le schéma des organes d'asservissement qui alimentent les bobines de cet équipage.

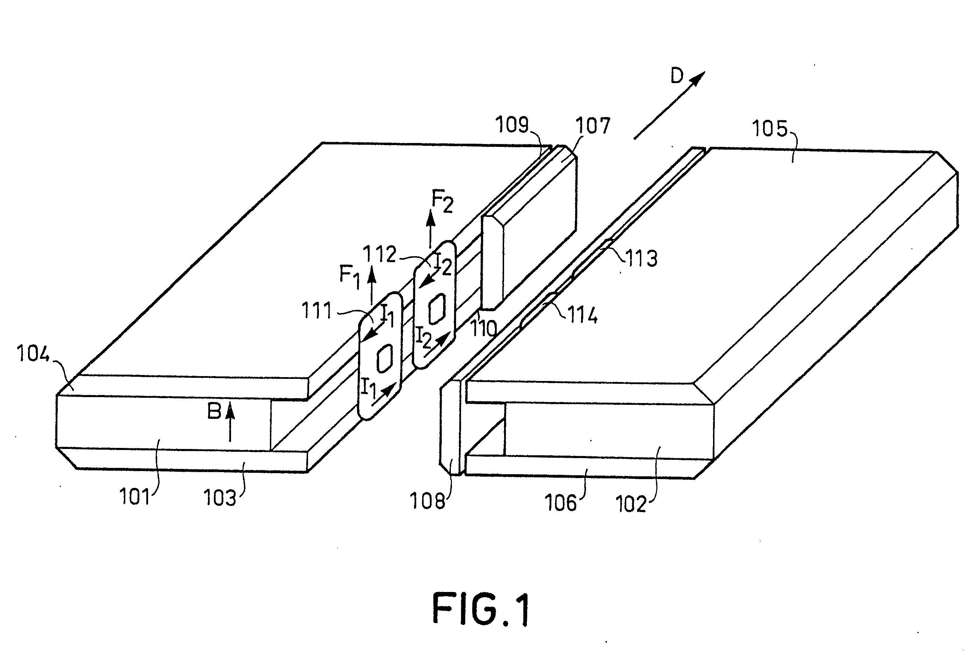

On n'a représenté sur la figure 1 que les pièces polaires du lecteur de vidéodisque et les bobines magnétiques de l'équipage mobile pour mieux mettre en évidence les forces qui s'exercent sur l'équipage mobile par l'intermédiaire de ces bobines, et la cinématique de l'ensemble.

Pour lire la piste portée par le disque, l'équipage mobile doit se déplacer le long d'une trajectoire D radiale par rapport à ce disque. De part et d'autre de cette trajectoire, sont placés deux ensembles permettant de générer des champs magnétiques et comprenant des aimants 101 et 102. Sur chacun de ces aimants sont placées des pièces polaires 103 à 106 qui les recouvrent au-dessus et en dessous et débordent vers l'espace compris entre ces aimants pour former des becs qui canalisent le flux magnétique. Ce flux magnétique se referme par l'intermédiaire de deux armatures 107 et 108 qui relient d'un côté les pièces polaires 103 ét 104 et de l'autre les pièces polaires 105 et 106. Ces armatures 107 et 108 sont séparées des pièces polaires qu'elles relient par des cales d'épaisseur non représentée sur la figure, situées à leurs deux extrémités et qui permettent de ménager des entrefers plans tels que 109 et 110 où se développent des champs magnétiques uniformes, dans un sens pour la pièce polaire supérieure et dans l'autre sens pour la pièce polaire inférieure. Les entrefers ont une épaisseur de l'ordre de 5/10ème de millimètre.

Dans ces entrefers plans circulent deux paires de bobines plates solidaires. L'une de ces paires, formée par les bobines 111 et 112, circule dans les entrefers 109 et 110 de l'ensemble magnétique de gauche sur la figure et une autre paire circule dans les entrefers plans de l'ensemble magnétique de droite. Ces bobines plates sont de forme sensiblement rectangulaire, réunies mécaniquement entre elles, et débordent au-dessus de l'entrefer 109 et en dessous de l'entrefer 110. Elles sont parcourues respectivement par des courants I1 et I2 générés par les circuits de commande du déplacement de l'équipage mobile du lecteur. Le fonctionnement étant le même pour la paire de bobines de droite, et pour la paire de bobines de gauche, nous limiterons l'explication à la paire de bobines de gauche pour laquelle on a sur la figure supprimé une partie de l'armature 107 afin de les découvrir pour les rendre visibles.

Les courants I1 et I2 circulent dans un sens pour la partie des bobines située dans l'entrefer 109, et dans l'autre pour la partie de ces bobines située dans l'entrefer 110. Le champ magnétique B induit par l'aimant 101 sort de la pièce polaire 104 dans un sens est rébouclé par l'armature 107, et pénètre dans la pièce polaire 103 dans l'autre sens.

L'interaction entre les courants I1 et I2 et le champ magnétique dans les entrefers 109 et 110 produit des forces électromagnétiques dont on constate en composant les sens selon les règles connues qu'elles sont dirigées vers le haut de la figure et donc dans le sens opposé à la pesanteur. Ces forces tendent donc à compenser l'influence de la pesanteur et les circuits qui génèrent les courants I1 et I2 permettent, par un asservissement à partir d'un signal d'erreur de focalisation obtenu par ailleurs, de régler la valeur de ces courants I1 et I2 de telle façon que les forces F1 et F2 compensent, en coopération avec les forces de même nature développées sur les deux bobines de la partie droite de la figure, le poids des bobines elles-mêmes et du reste de la partie de l'équipage mobile susceptible de se déplacer sous l'action de la pesanteur. Elles permettent également de le déplacer pour maintenir la focalisation.

Par ailleurs ces circuits permettent d'alimenter les bobines 111 et 112 de manière différentielle de façon à ce que, si la somme des forces F1 et F2 reste constante, la différence entre ces forces puissent varier dans un sens ou dans un autre, ce qui soumet les bobines à un couple permettant de les faire basculer autour d'un axe perpendiculaire aux bobines et passant dans leur plan de symétrie.

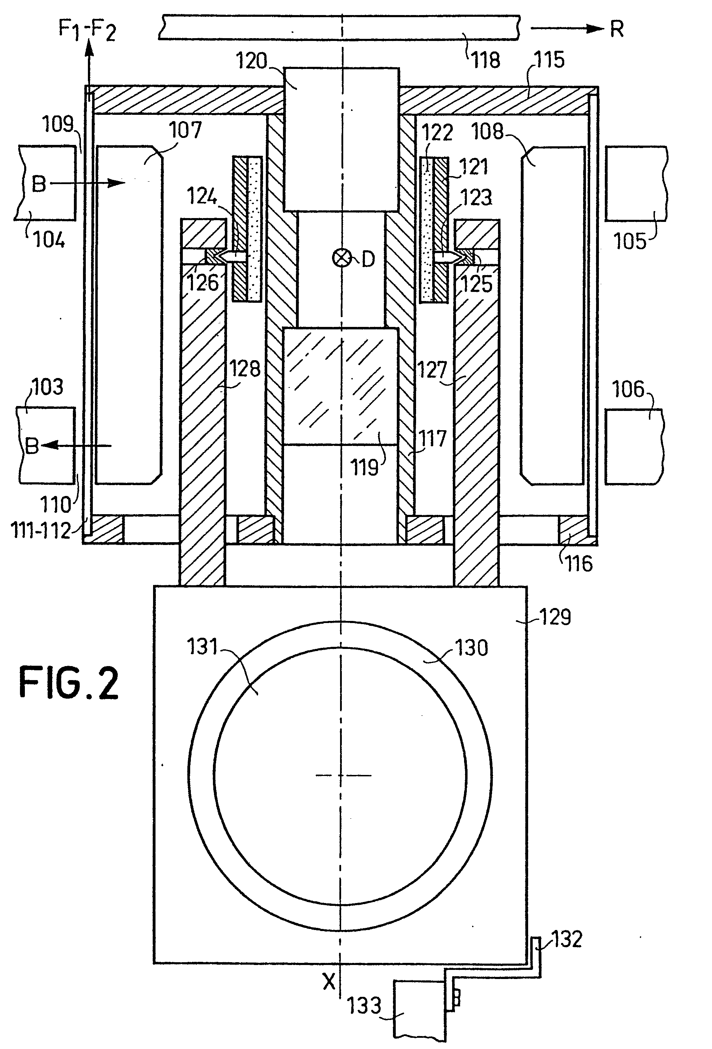

On retrouve sur la figure 2 les pièces polaires 103 à 106, les bobines 111 à 114, et les armatures 107 et 108.

Les bobines 111 à 114 sont formées d'un fil de cuivre émaillé de 15/100ème de millimètre de diamètre, enroulé sur 60 tours sous une seule épaisseur pour former une bobine plate de forme sensiblement carrée et de 2 cm de côté environ. On effectue ce bobinage entre deux mandrins écartés d'environ 20/100ème de millimètre et en enduisant le fil au fur et à mesure qu'on l'enroule avec une colle du genre époxy. Après polymérisation on sépare les mandrins et l'on obtient ainsi la bobine désirée. Une telle bobine pèse approximativement 1 gramme.

Ces bobines sont directement collées sur deux plaques, supérieure 115 et inférieure 116 en alliage léger qui permettent de former avec les bobines une cage ouverte aux deux extrémités et ayant la forme sensiblement d'un parallélépipède rectangle. Ces plaques 115 et 116 sont largement perforées d'une part pour permettre le passage des organes dont on va parler ci-après et d'autre part pour diminuer le poids de l'ensemble. On laisse juste assez de métal pour assurer la rigidité de l'ensemble.

Un morceau de tube 117 dont la surface extérieure est soigneusement rectifiée, est placé verticalement entre le milieu de la plaque 115 et le milieu de la plaque 116 en définissant un axe vertical X qui sera également un axe de symétrie de l'ensemble de l'équipage mobile. L'extrémité inférieure de ce tube est légèrement chanfreinée extérieurement de manière à l'introduire dans une ouverture circulaire ménagée dans la pièce 116. L'extrémité supérieure du tube est légèrement chanfreinée intérieurement de manière à maintenir un objectif de lecture qui permettra de lire la piste portée par le vidéodisque 118. Cet objectif 120 est introduit simultanément dans le chanfrein ménagé dans le tube 117 et dans une ouverture circulaire ménagée dans la plaque 115. Le tube 117 est également chanfreiné à l'intérieur depuis le bas jusque sensiblement sa moitié pour permettre d'introduire un miroir 119 incliné à 45° sur l'axe X. De ce fait ce miroir est également incliné à 45° sur la direction D vue en bout sur la figure et qui est perpendiculaire à l'axe X. Ce miroir permet de réfléchir vers l'objectif 120 un faisceau lumineux provenant d'une source située en dehors de l'espace parcouru par l'équipage mobile. Il permet également de renvoyer vers un détecteur situé en dehors de ce même espace le faisceau lumineux de lecture repris par l'objectif 120 après réflexion sur le disque 118.

Le tube 117 coulisse dans un manchon 121 muni d'une bague intérieure 122. Ce manchon est en alliage léger et la bague intérieure est formée d'un mélange anti-friction. Le tube 117 est monté avec un jeu d'environ 50 microns par rapport à la bague 122 et on a pu constater que, par un auto-centrage dû aux mouvements incessants du dispositif pour rattraper les écarts de focalisation, le tube 117 se centrait dans la bague 122 avec une précision de l'ordre du micron.

Le manchon 121 est muni de deux pivots 123 et 124 horizontaux et diamétralement opposés selon une direction perpendiculaire à la direction D.

Ces pivots 123 et 124 tourillonnent sur deux crapaudines 125 et 126 emmanchées dans deux bras verticaux 127 et 128.

Ces bras verticaux passent par deux ouvertures ménagées dans la plaque inférieure 116 et sont fixés sur une cage 129 située en dessous du plan de cette plaque 116.

Cette cage 129 est munie d'un écrou présentant un minimum de jeu et par exemple du type à circulation de billes.

Dans cet écrou se visse une vis mère 131 dont l'axe est parallèle à la direction D et qui permet de déplacer la cage 129, et donc l'ensemble de l'équipage mobile, le long d'un rayon du disque 118 afin de parcourir la piste portée par ce disque lorsque celui-ci tourne.

Cette cage 129 prend appui dans son déplacement sur une glissière 132 qui est fixée sur une pièce 133 faisant partie intégrante du bâti de lecteur de vidéodisque. Cette glissière 132 est réalisée par exemple en bronze au beryllium pour présenter une certaine élasticité qui permet un guidage ferme et sans point dur.

Ainsi donc le vidéodisque 118 est entraîné en rotation autour d'un axe qui est parallèle à l'axe X et sur la figure se trouve situé à une certaine distance derrière cet axe. Le point de lecture défile donc dans la direction R transversale sur la figure et perpendiculaire à la direction D.

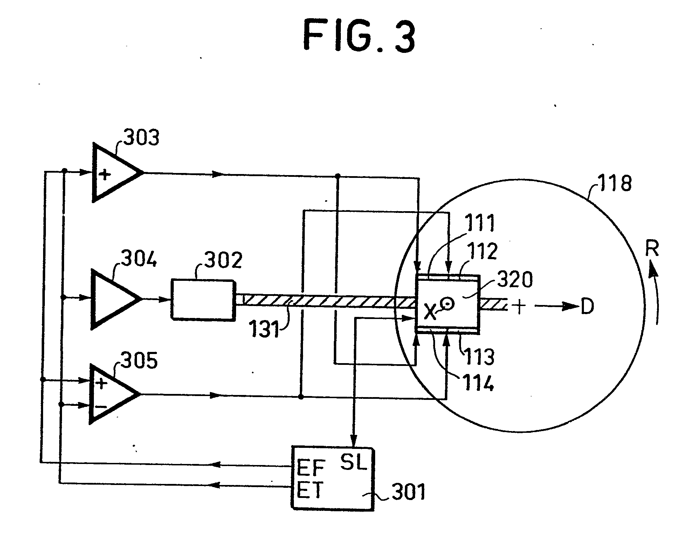

Dans l'exemple schématique du dispositif d'alimentation des bobines de l'équipage mobile représenté sur la figure 3, le vidéodisque est entraîné en rotation dans la direction R. La tête de lecture symbolisée par l'organe 320 est entraînée par la vis mère 131 vers le centre du disque et soumise à l'action des bobines 111 à 114.

Le signal de lecture SL fourni par cette tête de lecture est appliqué à un boîtier électronique de décommutation 301 qui, entre autres signaux, fournit un signal d'erreur de focalisation EF et un signal d'erreur de suivi de piste ET.

Le signal EF alimente deux amplificateurs 303 et 305 qui ont un gain très grand et peuvent délivrer une puissance très grande en sortie. Ces amplificateurs alimentent les bobines 111 à 114 par des courants de même intensité pour une même valeur du signal EF. Le gain important des amplificateurs permet d'obtenir un courant important pour un minimum de tension d'erreur c'est-à-dire que le servomécanisme fonctionne en asservissement de position. Avec le dimensionnement déjà décrit des bobines, et pour un circuit magnétique donnant un champ dans les entrefers de l'ordre de 1 Tesla, on obtient pour un courant crête de 2 ampères, valeur obtenue de manière tout à fait courante et sans aucun danger ni pour les amplificateurs, ni pour les bobines, une force verticale de 5 Newtons. La masse de l'ensemble mobile verticalement, c'est-à-dire essentiellement des bobines, des deux plaques 115 et 116, de l'objectif, du tube 117 et du miroir 119, est de l'ordre de 20 grammes. La force ainsi obtenue en valeur crête est donc largement supérieure à celle nécessaire pour soutenir cette partie mobile verticalement dans une position stable, et elle permet alors d'appliquer à la partie mobile verticalement une accélération de l'ordre de 25 g. On a pu constater qu'une telle accélération permet de garder la focalisation du faisceau de lecture sur un disque entraîné à une vitesse de rotation de 1 500 tours par minute et présentant le plus mauvais état de surface compatible avec l'obtention d'un signal de lecture exploitable.

Le signal d'erreur de suivi de piste ET est tout d'abord appliqué à un amplificateur 304 qui alimente un moteur 302 lequel entraîne en rotation la vis mère 131. On obtient une avance moyenne de l'équipage mobile le long d'un rayon du disque 118 qui permet de suivre le pas moyen de la piste portée par le disque.

Ce signal ET est d'autre part appliqué d'une part à l'amplificateur 303 en parallèle avec le signal EF, et enfin à l'amplificateur 305 sur une entrée inverseuse par rapport à l'entrée où est appliquée le signal EF.

L'amplificateur 303 alimentant les bobines 111 et 114 situées d'un côté de l'axe de rotation défini par les pivots 123 et 124, et l'amplificateur 305 alimentant les bobines 112 et 113 situées de l'autre côté de cet axe, l'action du signal ET amène par exemple une augmentation du courant dans les bobines 111 et 114 et une diminution corrélative du courant dans les bobines 112 et 113, ou bien entendu l'inverse. Une telle alimentation différentielle des bobines entraîne une variation dissymétrique des forces F1 et F2 qui fait que tandis que par exemple la force F1 augmente d'une certaine quantité, la force F2 diminue de la même quantité. De ce fait l'ensemble composé de la partie mobile verticalement définie précédemment, et du manchon 121 muni de ses pivots 123 et 124 tend à pivoter autour de l'axe défini par ces pivots qui reposent sur les crapaudines 125 et 126. Sous l'effet de ce pivotement le rayonnement lumineux arrivant sur le miroir 119 et focalisé par l'objectif 120 sur le disque se déplace légèrement dans le sens radial sur ce même disque. Les différentes polarités des circuits électroniques sont choisies pour que ce basculement tende à annuler le signal d'erreur de suivi de piste ET.

Cette erreur de suivi de piste provient essentiellement de l'excentrement du disque par rapport à son axe de rotation. Cet excentrement est de l'ordre de 100 microns, ce qui provoque, compte tenu de la vitesse de rotation du disque une oscillation sinusoïdale à 25 hertz des parties oscillantes de l'équipage mobile autour de l'axe défini par les pivots. Compte tenu de la masse de ces parties oscillantes, qui est aussi de l'ordre de 20 grammes puisque le manchon 121 muni des pivots et de sa bague est d'une masse très faible, la force différentielle nécessaire pour amorcer ce mouvement est de l'ordre de 0,1 newton. On constate qu'elle est très inférieure à la force nécessaire pour obtenir l'accélération verticale maximale de l'objectif. Comme on a vu que cette force maximale était obtenue aisément et sans problème, il en est de même pour cette légère force différentielle nécessaire au basculement à la vitesse maximum.

Le coulissement du tube 117 dans le matériau antifriction garnissant l'intérieur de la bague 121, et la rotation des pivots 123 et 124 dans les crapaudines 125 et 126, sont des mouvements mécaniques qui s'effectuent sans point dur en raison de la constitution des pièces en présence.

On constate toutefois que le tube 117 peut non seulement coulisser verticalement dans la bague 122 mais que rien ne l'empêche de tourner dans cette bague autour de l'axe X. Les limites à ce battement sont alors définies par l'appui des bobines 111 à 114 sur les pièces polaires 103 à 108. Pour limiter les risques de coincement, ou même de points durs, dus à la constitution de ces bobines, on a surmoulé celles-ci dans une résine du genre époxy, de préférence la même que celle qui a servi au bobinage initial. Ce surmoulage est effectué en plaçant les bobines entre deux plaques parallèles finement rectifiées et garnies d'un produit de démoulage. Ces plaques ont été maintenues en place le temps suffisant pour que la polymérisation soit complète, et au démoulage on a obtenu un état de surface excellent. En admettant alors un jeu d'environ 100 microns entre les bobines et les armatures, ce qui s'obtient par une épaisseur adéquate des cales définissant les entrefers, on a constaté que les guidages ainsi obtenus ne présentaient aucun point dur venant gêner la focalisation ou le suivi de piste.

Dans un autre mode de réalisation on peut remplacer le miroir de renvoi par une source lumineuse telle qu'un laser à semiconducteur par exemple. On peut alors associer à cette source lumineuse une cellule de détection photoélectrique telle qu'une photodiode.

## Revendications

1. Equipage mobile d'un lecteur enregistreur de vidéodisque, du type comprenant un objectif (120) permettant de focaliser un faisceau lumineux sur une piste portée par un vidéodisque (118) le long d'un premier axe (X) sensiblement perpendiculaire au disque, un bâti (115-116) supportant l'objectif, un chariot (129) supportant ce bâti et des moyens (130-131) permettant de déplacer ce chariot radialement par rapport au disque selon un deuxième axe (D) pour suivre la piste, des moyens (117, 121, 126) permettant de réunir ce bâti au chariot en permettant un premier mouvement longitudinal du bâti par rapport au chariot le long du premier axe pour maintenir la focalisation du faisceau lumineux sur le disque et un deuxième mouvement de rotation du bâti par rapport au chariot autour d'un troisième axe perpendiculaire aux deux premiers axes pour maintenir le point de focalisation du faisceau lumineux sur la piste du disque, et une première paire (111-112) de bobines fixées au bâti symétriquement par rapport au premier axe et permettant, lorsqu'elles sont parcourues par des courants électriques et plongées dans des champs magnétiques (B), de développer des forces provoquant les premier et deuxième mouvements ; caractérisé en ce que les bobines (111-112) de ladite première paire sont plates et fixées au bâti (115-116) dans un plan perpendiculaire au troisième axe et en ce qu'il comprend pour générer lesdits champs magnétiques (B), au moins un aimant (101) muni de deux pièces polaires (103-104) et d'une armature (107) définissant entre elle-même et les pièces polaires deux entrefers plans (109-110) s'étendant dans la direction du deuxième axe (D), situés l'un au-dessus de l'autre par rapport au premier axe (X) et parcourus par des champs magnétiques parallèles au troisième axe et de sens opposés, ladite première paire (111-112) de bobines coulissant dans ces entrefers (109-110) pour que le courant électrique qui y circule ait dans les portions des bobines situées dans ces entrefers la direction du deuxième axe et des sens opposés pour une même bobine.

2. Equipage selon la revendication 1, caractérisé en ce qu'il comprend en outre un miroir (119) solidaire du bâti et permettant de renvoyer vers l'objectif un faisceau lumineux provenant d'une source extérieure à l'équipage.

3. Equipage selon la revendication 1, caractérisé en ce qu'il comprend en outre une source lumineuse et un détecteur photoélectrique solidaire du bâti.

4. Equipage selon l'une quelconque des revendications 1 à 3, caractérisé en ce qu'il comprend en outre une deuxième paire (113-114) de bobines plates fixées au bâti symétriquement à la première paire de bobines par rapport au premier axe.

5. Equipage selon l'une quelconque des revendications 1 à 4, caractérisé en ce que les moyens permettant le premier mouvement longitudinal comprennent un tube circulaire (117) fixé au bâti et axé sur le premier axe, et un manchon (121) relié au chariot et dans lequel coulisse le tube (117).

6. Equipage selon l'une quelconque des revendications 1 à 5, caractérisé en ce que les moyens permettant le deuxième mouvement de rotation comprennent deux pivots (123-124) fixés de part et d'autre du manchon et matérialisant le troisième axe, et deux crapaudines (125-126) fixées à des bras supportés par le chariot et sur lesquelles s'appuient les pivots.

7. Lecteur enregistreur de vidéodisque, caractérisé en ce qu'il comprend un équipage mobile selon l'une quelconque des revendications 1 à 5, une vis mère (131) parallèle au deuxième axe sur laquelle se visse le chariot, un rail (132) de guidage de celui-ci parallèle au deuxième axe, au moins un aimant (101) muni de deux pièces polaires (103-104) et d'une armature (107) définissant entre elle-même et les pièces polaires deux entrefers plans (109-110) s'étendant dans la direction du deuxième axe, situés l'un au-dessus de l'autre, et parcourus par des champs magnétiques parallèles au troisième axe et de sens opposés, et des moyens (303-305) permettant d'alimenter les bobines par des courants électriques fonction d'une tension d'erreur de focalisation et d'une tension d'erreur de suivi de piste ; la première paire de bobines coulissant dans ces entrefers pour que le courant électrique qui y circule ait dans les portions des bobines situées dans ces entrefers la direction du deuxième axe et des sens opposés pour une même bobine.

## Claims

1. Mobile unit of a video disc player/recorder of the type comprising an objective (120) for focusing a light beam on a track carried by a video disc (118) along a first axis (X) substantially perpendicular to the disc, a frame (115-116) supporting the objective, a carriage (129) supporting said frame and means (130-131) for displacing said carriage radially with respect to the disc along a second axis (D) for following the track, means (117, 121, 126) permitting the connection of said frame to the carriage whilst permitting a first longitudinal movement of the frame with respect to the carriage along the first axis for maintaining the focusing of the light beam on the disc and a second rotational movement of the frame with respect to the carriage about a third axis perpendicular to the first two axes for maintaining the focusing point of the light beam on the track of the disc, and a first pair (111-112) of coils secured to the frame symmetrically with respect to the first axis permitting when traversed by electric currents and immersed in magnetic fields (B) the production of forces causing the first and the second movement ; characterized in that the coils (111, 112) of said first pair are flat and secured to the frame (115-116) in a plane perpendicular to the third axis, and in that it comprises for generating said magnetic fields (B) at least one magnet (101) provided with two pole pieces (103-104) and an armature (107) defining between itself and the pole pieces two plane iron gaps (109-110) extending in the direction of the second axis (D) situated one above the other with respect to the first axis (X) and traversed by magnetic fields parallel to the third axis and of opposite directions, said first pair (111-112) of coils sliding in said iron gaps (109-110) so that the electric current flowing therein has in the portions of the coils situated in said iron gaps the direction of the second axis and opposite senses for the same coil.

2. Unit according to claim 1, characterized in that it further comprises a mirror (119) fixedly connected to the frame and permitting the directing towards the objective of a light beam coming from a light source outside the unit.

3. Unit according to claim 1, characterized in that it further comprises a light source and a photoelectric detector fixedly connected to the frame.

4. Unit according to any one of claims 1 to 3, characterized in that it further comprises a second pair (113-114) of flat coils which are secured to the frame symmetrically with the first pair of coils with respect to the first axis.

5. Unit according to any one of claims 1 to 4, characterized in that the means permitting the first longitudinal movement comprise a circular tube (117) secured to the frame and disposed round the first axis, and a sleeve (121) which is connected to the carriage and in which the tube (117) slides.

6. Unit according to any one of claims 1 to 5, characterized in that the means permitting the second, rotation movement comprise two pivots (123-124) secured on both sides of the sleeve and representing the third axis, and two pivot bearings (125-126) which are secured to arms held by the carriage and on which the pivots bear.

7. Video disc player/recorder, characterized in that it comprises a mobile unit according to any one of claims 1 to 5, a lead screw (131) parallel to the second axis with which the carriage is in screw engagement, a guide rail (32) for guiding the latter parallel to the second axis, at least one magnet (101) equipped with two pole pieces (103-104) and an armature (107) defining between itself and the pole pieces two plane iron gaps (109-110) extending in the direction of the second axis, situated one above the other and traversed by magnetic fields parallel to the third axis and of opposite senses and means (303-305) permitting the supply of the coils with electrical currents which are dependent on a focusing error voltage and a track following error voltage ; the first pair of coils sliding in said iron gaps so that the electrical current flowing therein has in the portions of the coils situated in said iron gaps the direction of the second axis and opposite senses for the same coil.

## Ansprüche

1. Bewegliche Einheit eines Bildplatten-Lese-Aufzeichnungsgeräts, vom Typ mit einem Objektiv (120) zum Fokussieren eines Lichtbündels auf einer von einer Bildplatte (118) getragenen Spur entlang einer ersten Achse (X), die im wesentlichen senkrecht zu der Platte ist, einem das Objektiv halternden Aufbau (115-116), einem Wagen (129), an dem dieser Aufbau gehaltert ist, und Mitteln (130-131) zur Bewegung dieses Wagens radial zu der Platte entlang einer zweiten Achse (D), um der Spur zu folgen, wobei Mittel (117, 121, 126) die Verbindung dieses Aufbaus mit dem Wagen ermöglichen, indem sie eine erste Längsbewegung des Aufbaus in bezug auf den Wagen entlang der ersten Achse zulassen, um die Fokussierung des Lichtbündels auf der Platte zu wahren, und eine zweite, Drehbewegung des Aufbaus in bezug auf den Wagen um eine dritte Achse zulassen, die senkrecht zu den ersten beiden Achsen ist, um den Fokussierpunkt des Lichtbündels auf der Spur der Platte zu halten, und mit einem ersten Paar (111-112) von Spulen, die an dem Aufbau symmetrisch in bezug auf die erste Achse befestigt sind und es ermöglichen, wenn sie von elektrischen Strömen durchflossen werden und in Magnetfelder (B) eintauchen, Kräfte zu erzeugen, welche die erste und die zweite Bewegung hervorrufen ; dadurch gekennzeichnet, daß die Spulen (111-112) des ersten Paares flach ausgebildet und an dem Aufbau (115-116) in einer Ebene befestigt sind, die senkrecht zu der dritten Achse ist, und daß sie zur Erzeugung der genannten Magnetfelder (B) wenigstens einen Magneten (101) enthält, der mit zwei Polstücken (103-104) und einem Anker (107) versehen ist, der zwischen sich selbst und den Polstücken zwei ebene Eisenspalte (109-110) bildet, welche sich in der Richtung der zweiten Achse (D) erstrecken, in bezug auf die erste Achse (X) einer über dem anderen angeordnet sind und von Magnetfeldlinien durchlaufen werden, die parallel zu der dritten Achse sind und entgegengesetzte Richtungen aufweisen, wobei das erste Paar (111-112) von Spulen in diesen Eisenspalten (109-110) verschiebbar ist, damit der darin fließende Strom in denjenigen Teilen der Spulen, die sich innerhalb dieser Eisenspalte befinden, für dieselbe Spule die Richtung der zweiten Achse und entgegengesetzten Stromsinn aufweist.

2. Einheit nach Anspruch 1, dadurch gekennzeichnet, daß sie ferner einen Spiegel (119) umfaßt, der mit dem Aufbau fest verbunden ist und es ermöglicht, ein Lichtbündel, das von einer außerhalb der Einheit angeordneten Lichtquelle stammt, zu dem Objektiv umzulenken.

3. Einheit nach Anspruch 1, dadurch gekennzeichnet, daß sie ferner eine Lichtquelle und einen fotoelektrischen Detektor enthält, der mit dem Aufbau fest verbunden ist.

4. Einheit nach einem der Ansprüche 1 bis 3, dadurch gekennzeichnet, daß sie ferner ein zweites Paar (113-114) von flachen Spulen umfaßt, die an dem Aufbau symmetrisch zu dem ersten Spulenpaar in bezug auf die erste Achse befestigt sind.

5. Einheit nach einem der Ansprüche 1 bis 4, dadurch gekennzeichnet, daß die die erste Längsbewegung zulassenden Mittel ein kreisrundes Rohr (117) umfassen, das an dem Aufbau befestigt und um die erste Achse herum angeordnet ist, sowie eine mit dem Wagen verbundene Hülse (121) umfassen, innerhalb welcher das Rohr (117) gleitend verschiebbar ist.

6. Einheit nach einem der Ansprüche 1 bis 5, dadurch gekennzeichnet, daß die Mittel, welche die zweite Bewegung bzw. Drehbewegung zulassen, zwei Schwenkzapfen (123-124), die auf beiden Seiten der Hülse befestigt sind und die dritte Achse darstellen, sowie zwei Zapfenlager (125-126) umfassen, die an durch den Wagen gehaltenen Armen befestigt sind und auf denen sich die Schwenkzapfen abstützen.

7. Bildplatten-Lese-Aufzeichnungsgerät, dadurch gekennzeichnet, daß es eine bewegliche Einheit nach einem der Ansprüche 1 bis 5, eine zu der zweiten Achse parallele Leitspindel (131), mit welcher der Wagen in Schraubeingriff ist, eine Führungsschiene (32) zur Führung desselben parallel zu der zweiten Achse, wenigstens einen Magneten (101), der mit zwei Polstücken (103-104) und einem Anker (107) versehen ist, der zwischen sich selbst und den Polstücken zwei ebene Eisenspalte (109-110) bildet, welche sich in der Richtung der zweiten Achse erstrecken und übereinander liegen sowie von Magnetfeldlinien durchquert werden, die paralle: zu der dritten Achse sind und entgegengesetzten Sinn haben, und Mittel (303-305) zur Versorgung der Spulen mit elektrischen Strömen, die von einer Fokussier-Fehlerspannung und einer Spurfolge-Fehlerspannung abhängen umfaßt ; wobei das erste Paar von Spulen in diesen Eisenspalten so verschiebbar ist, daß der darin fließende elektrische Strom in Teilen der Spulen, welche sich im Inneren dieser Eisenspalte befinden, für dieselbe Spule die Richtung der zweiten Achse und entgegengesetzten Stromsinn aufweist.

FIG.1

FIG.2

# FIG. 3